# EUROPÄISCHE PATENTSCHRIFT

(11) **EP 1 952 102 B1**
(45) Veröffentlichungstag und Bekanntmachung des Hinweises auf die Patenterteilung: **23.10.2013**
(21) Anmeldenummer: 06828540.2
(22) Anmeldetag: 20.11.2006
(51) Int. Cl.: G01G 11/00

(54) **AUFNAHME FÜR DAS ANTRIEBSAGGREGAT EINER TRANSPORTVORRICHTUNG**
HOLDING FIXTURE FOR THE DRIVE UNIT OF A CONVEYING DEVICE
FIXATION POUR UN ENSEMBLE PROPULSIF D'UN DISPOSITIF DE TRANSPORT

(30) Priorität: 21.11.2005 DE 102005055754
(43) Veröffentlichungstag der Anmeldung: 06.08.2008
(73) Patentinhaber: Wipotec Wiege- und Positioniersysteme GmbH, 67657 Kaiserslautern (DE)
(72) Erfinder: DÜPPRE, Theo, 67663 Kaiserslautern (DE)
(74) Vertreter: Mischung, Ralf
(86) Internationale Anmeldenummer: PCT/DE2006/002036
(87) Internationale Veröffentlichungsnummer: WO 2007/057000

(56) Entgegenhaltungen:
- DE-A1- 2 319 895
- GB-A- 2 097 544
- JP-A- 2004 340 593
- US-A- 4 440 249
- US-A- 5 170 857

## Beschreibung

Die vorliegende Erfindung betrifft eine Aufnahme für das Antriebsaggregat einer Transportvorrichtung und eine Waage mit wenigstens einer solchen Aufnahme.

Aus der Wägetechnik sind Waagen bekannt, welche geförderte Güter wiegen. Üblicherweise ist dabei eine Transportvorrichtung vorgesehen, welche die zu wiegenden Güter transportiert. Diese Transportvorrichtung wirkt auf den Lastaufnehmer einer Wägezelle und überträgt somit auch das Gewicht von auf der Transportvorrichtung bewegten Gütern.

Bekannt ist weiterhin, dass die Transportvorrichtung durch einen Motor angetrieben wird, der an der Transportvorrichtung angeordnet ist. Dessen Gewicht wirkt nachteiligerweise auf die Transportvorrichtung ein, da diese durch die Motormasse verformt werden kann und Stöße bei Produktauflauf und -ablauf hervorgerufen werden können.

Aus der US 4,440,249 ist ein angetriebenes Wiegeförderband bekannt. Dort sitzt eine Transportvorrichtung auf einer Wiegezelle, die das Gewicht der Transportvorrichtung mit den darauf geführten Gütern erfasst.

Die US 5,170,857 beschreibt eine ähnliche Vorrichtung. Auch hier sitzt eine Transport-vorrichtung mit innen liegendem Antriebsaggregat auf einer Wägezelle auf, so dass das Gewicht der transportierten Güter zusammen mit dem Gewicht der Transportvor richtung durch die Wägezelle erfasst wird.

Aus der GB 2 097 544 ist eine Waage bekannt, welche zu wiegende Güter mittels Transportriemen fördert und gleichzeitig wiegt. Der die Riemen antreibende Motor sitzt dabei etwas abseits der Förderstrecke, so dass die Transportvorrichtung von dem Antriebsaggregat abgekoppelt werden kann,

Aus der JP 2004-340593 A ist eine Wägevorrichtung bekannt, bei der unterhalb der Wägezelle eine einen Antrieb aufweisende Aufnahme angeordnet ist. Die Aufnahme ist durch eine Öffnung im Gehäuse der Wägezelle hindurch mit der Unterseite des Lastaufnehmers verbunden, wobei der entstehende Ringspalt durch eine Membrane abgedichtet ist Durch zwei die Wägezelle seitlich umgreifende Tragelemente ist die Aufnahme mit der oberhalb der Wägezelle angeordneten Transportvorrichtung verbunden. Eine Kontrollwaage für Warenstücke mit einer angetriebenen Transportbahn ist aus der DE 2 319 895 bekannt. Auf einem Transportband aufliegende und zu wiegende Güter werden von einem unterhalb des Bandes angeordneten Motor, der mit dem Band gekoppelt ist, angetrieben. Die gesamte Vorrichtung ist über einen Parallelführungsmechanismus gegen eine Federkraft absenkbar, wobei das Maß der vertikalen Austenkung zur Ermittlung der Gewichtskraft der aufliegenden Güter herangezogen wird.

Aufgabe der Erfindung ist es daher, eine Vorrichtung für eine Waage für transportierte Güter zu schaffen, welche den Einfluss des Motors auf die Transportvorrichtung bzw. die gesamte Waage in mechanischer und messtechnischer Hinsicht minimiert.

Die Aufgabe wird gelöst durch eine Aufnahme für das Antriebsaggregat einer Transportvorrichtung nach Anspruch 1.

Eine solche Transportvorrichtung ist zum Transport von Gütern ausgebildet, deren Gewichtskraft von der Wägezelle einer Waage zu erfassen ist. Die Wägezelle erfährt dabei die zu erfassende Gewichtskraft über einen Krafteinleitungsbereich und in Richtung einer gedachten, diesen Einleitungsbereich durchstoßenden Krafteinleitungsachse. Üblicherweise ist der Krafteinleitungsbereich die Oberseite eines Lastaufnehmers der Wägezelle, wobei die Krafteinleitungsachse relativ dazu meist senkrecht verläuft. Bekannt und in gleicher Weise betroffen sind auch Anordnungen, bei denen die Gewichtskraft von unten in den Lastaufnehmer eingebracht wird. Die Last liegt dann nicht auf dem Lastaufnehmer auf, sondern hängt an ihm.

Erfindungsgemäß ist die Aufnahme, welche das Antriebsaggregat für die Transportvorrichtung enthält, zwischen Wägezelle und Transportvorrichtung vorsehbar, um dadurch die Gewichtskraft von der Transportvorrichtung durch die Aufnahme hindurch in die Wägezelle bzw. deren Lastaufnehmer einzuleiten. Die Aufnahme des Antriebsaggregats dient also explizit dazu, die Gewichtskraft von der Transportvorrichtung in die Wägezelle weiterzuleiten. Sie bildet diesbezüglich auch das einzige Bindeglied zwischen diesen Komponenten. Durch die wählbare hohe Steifigkeit bzw. Stabilität der Aufnahme - beispielsweise aus verschraubten Aluminiumplatten - wird außerdem insgesamt eine stabile und leichte Bauweise der Waage ermöglicht.

Durch eine solche Anordnung werden mehrere Nachteile des Stands der Technik überwunden. Die oft anzutreffende Anordnung des Motors abseits der Krafteinleitungsachss bzw. außermittig zum Lastaufnehmer der Wägezelle, führte oft zu Ecklastfehlern.

Vibrationen des Bodens führen außerdem bei außermittiger Anordnung des Antriebsaggregats unter Umständen zu großen Momenten im Bereich der Lasteinleitung, wodurch Wägesignale verfälscht und Maßnahmen zur Erschütterungskorrektur erschwert werden.

In der vorliegenden Erfindung wird das Antriebsaggregat (darunter ist im Folgenden wenigstens ein Motor, gegebenenfalls auch ein Getriebe oder dergleichen, zum Antrieb der Transportvorrichtung zu verstehen) von der Aufnahme aufgenommen, welche gleichzeitig zur Übertragung der Gewichtskräfte dient. Die Aufnahme (und damit auch das darin aufgenommene Antriebsaggregat) ist vorzugsweise im Wesentlichen oberhalb des Krafteinleitungsbereichs der Wägezelle angeordnet, ohne dabei eine nennenswerte asymmetrische Form relativ zur Krafteinleitungsachse aufzuweisen. Dadurch wird das Antriebsaggregat zumindest in die Nähe der Krafteinleitungsachse gerückt, so dass exzentrische Lasten am Lastaufnehmer, resultierend aus der Gewichtskraft des Antriebsaggregats, verringert oder vermieden werden.

Da das Antriebsaggregat erfindungsgemäß in der Aufnahme angeordnet ist (und nicht separat bzw. getrennt von der die Gewichtskraft übertragenden Konstruktion, nämlich an der Transportvorrichtung), reduzieren sich die mechanische Belastungen der Transportvorrichtung deutlich, wodurch ihre Lebensdauer erhöht und eine einfache Konstruktion ermöglicht wird.

Dieser Vorteil zeigt sich insbesondere dann, wenn unterschiedlich dimensionierte Transportvorrichtungen unter Nutzung des selben Antriebs für die Waage verwendet werden sollen. Da das Antriebsaggregat losgelöst von der Transportvorrichtung aufgehängt bzw. gehalten wird, wirken sich auch unterschiedliche Abmessungen der verschiedenen Transportvorrichtungen nicht oder nur unwesentlich aus, da der Motor stets von der Aufnahme getragen wird und seine Anordnung im Raum im Wesentlichen beibehält. Verschiedene Ecklasteinflüsse bei Verwendung unterschiedlicher Transportvorrichtungen können dadurch vermieden werden.

Erfindungsgemäß hervorzuheben ist die Tatsache, dass die Erfindung den modularen Aufbau einer Waage, bestehend aus Wägezelle, Aufnahme und Transportvorrichtung, unterstützt bzw. ermöglicht. So kann die Aufnahme mit dem Antrieb als Modul verstanden werden, welches wahlweise mit einer geeigneten Wägezelle einerseits oder einer Transportvorrichtung andererseits kombinierbar ist. Auf eine gewählte Kombination von Wägezelle und Aufnahme können dabei beispielsweise unterschiedliche Transportvorrichtungen aufgesetzt werden. Andererseits kann beispielsweise auch die Aufnahme mit dem Antriebsaggregat zwischen einer Transportvorrichtung und der Wägezelle in modularem Sinn ausgewechselt werden.

Die Erfindung sieht daher vor, dass die Aufnahme über einen vorzugsweise werkzeuglos betätigbaren Verriegelungsmechanismus mit der Wägezelle und/oder der Transportvorrichtung lösbar verbindbar oder verriegelbar ist. Die Aufgabe der Erfindung ist daher auch die besonders einfache und schnelle Einsetzbarkeit bzw. der Austausch der Aufnahme bzw. deren Anbindung an die Transportvorrichtung und/oder die Wägezelle zu ermöglichen. Ein geeigneter hand-betätigbarer Verriegelungsmechanismus gewährleistet eine solche schnelle Verbindbarkeit bzw. Lösbarkeit, ohne dass dafür losgelöste Befestigungsteile (Schrauben, Muttern etc.) erforderlich wären. Dies erhöht die Teilesicherheit für die Vorrichtung. Insbesondere im Lebensmittelbereich wird dabei auch vermieden, dass (metallische) Befestigungsmittel ungewollt mit dem Produkt in Berührung geraten bzw. darin verbleiben. Auch der Verzicht auf Werkzeuge beseitigt die Gefahr, dass solche Werkzeuge, deren Schmiermitteln etc. mit den Produkten in Berührung kommen. Weiterhin wird durch diesen Verriegelungsmechanismus der modulare Charakter der Aufnahme in Verbindung mit der Transportvorrichtung bzw. der Wägezelle unterstrichen. Durch einfache Betätigung des Verriegelungsmechanismus können die vorgenannten Komponenten leicht miteinander verbunden bzw. voneinander getrennt und ausgetauscht werden.

Eine weitere vorteilhafte Ausführungsform der Erfindung sieht vor, dass das Antriebsaggregat in der Aufnahme so angeordnet ist, dass der aus Aufnahme und Antriebsaggregat resultierende Schwerpunkt im Wesentlichen nahe bei oder in der Krafteinleitungsachse liegt. Dadurch ergibt sich der Vorteil, dass die Wägezelle keine außermittige Belastung erfährt, welche durch die Gewichtskraft der Aufnahme mit Antriebsaggregat entstünde, wenn insbesondere das Antriebsaggregat abseits der Krafteinleitungsachse angeordnet wäre. Dies stabilisiert den Aufbau der Waage und vereinfacht die Auswertung der Messwerte.

Eine weiterhin vorteilhafte Ausführungsform der Erfindung sieht vor, dass das Antriebsaggregat in der Aufnahme so angeordnet ist, dass der aus Aufnahme, Antriebsaggregat und Transportvorrichtung resultierende Schwerpunkt im Wesentlichen nahe bei oder in der Krafteinleitungsachse liegt. Dies stabilisiert den Aufbau der Waage zusätzlich, da dann auch eventuelle außermittige Lasten durch die Transportvorrichtung vermieden werden. Zumindest alle statischen Gewichtskräfte wirken dann im Wesentlichen entlang der Krafteinleitungsachse in die Wägezelle ein, ohne gleichzeitig störende Momente zu bilden. Die von der Transportvorrichtung geförderten Güter können dabei - je nach Gewicht - für die Stabilität des gesamten Aufbaus und des Wiegevorgangs unberücksichtigt bleiben, solange die anderen Komponenten (Transportvorrichtung, Aufnahme mit Antriebsaggregat) in Summe die wesentlichen Massen darstellen.

Nach einer weiteren vorteilhaften Ausführungsform der Erfindung weist die Aufnahme für die elektromagnetische Verträglichkeit ein metallisches, weitgehend dicht gekapseltes Gehäuse auf. Darin ist das Antriebsaggregat aufgenommen und weitest möglich umschlossen. Der Motor mit seiner üblicherweise hohen elektromagnetischen Strahlung wird durch ein solches Gehäuse vorteilhaft bestmöglich dicht gekapselt, um den Einfluss hochfrequenter Strahlung auf benachbarte Komponenten zu minimieren. Die elektromagnetischen Emissionen werden dabei, wenn alle Bauteile metallisch oder metallisiert ausgeführt und niederohmig leitfähig miteinander verbunden (geerdet) sind, stark reduziert. Insbesondere Einflüsse auf benachbarte elektronische Geräte werden so bestmöglich vermieden.

Eine alternative oder ergänzende Ausführungsform der Erfindung sieht vor, dass die Aufnahme zur Abfuhr oder Abschirmung von Antriebswärme des enthaltenen Antriebsaggregats von einem Gehäuse umschlossen ist. Das Gehäuse kann dabei einerseits wärmeisolierend wirken, um die Abwärme des Motors nicht auf die Außenseite der Aufnahme gelangen zu lassen. Dies ist dann sinnvoll, wenn die von der Transportvorrichtung geförderten Produkte wärmeempfindlich sind.

Andererseits kann das Gehäuse die Wärme durch geeignete Wahl der Beschaffenheit und/oder Größe seiner Oberfläche bestmöglich ableiten. Dadurch können die aus dem Stand der Technik bekannten lokalen hohen Temperaturen in unmittelbarer Nähe des Motors vermieden werden. Durch die naturgemäß größere Oberfläche der Aufnahme relativ zu dem darin enthaltenen Antriebsaggregat kann die von diesem produzierte Wärme über eine größere Fläche abgeführt werden, so dass die Oberflächentemperatur sinkt. Lokale Extremtemperaturen werden dadurch verhindert. Auch dies dient zur Schonung der geförderten Produkte. Durch eine bessere Wärmeabfuhr kann eine höhere Motorleistung umgesetzt werden oder aber die Oberflächentemperatur wird bei konstanter Motorleistung reduziert. Dadurch werden die Betriebsparameter der Waage optimiert.

Eine weitere oder alternative Ausführungsform der Erfindung sieht vor, dass die Aufnahme zum IP-Schutz der darin angeordneten Komponenten von einem Gehäuse umschlossen ist. Dadurch erfährt das Antriebsaggregat und insbesondere der Motor einen zusätzlichen Schutz. Insbesondere Motoren mit integrierter Elektronik sind dadurch sicher geschützt und im Nassbereich einsetzbar. Die Waage und insbesondere das in der Aufnahme enthaltene Antriebsaggregat sind durch diesen IP-Schutz unter anderem gegen Reinigungsflüssigkeiten, Spritzwasser oder auch die Anwendung von Dampfstrahlem bzw. generell auch gegen Feuchteeinflüsse geschützt. Die modulare Bauweise erleichtert dabei auch die Demontage für die ggfls. separate Reinigung der einzelnen Komponenten.

Der IP-Schutz kann dabei vorteilhaft so ausgeführt sein, dass an einer nach unten weisenden Öffnung möglicherweise in das Gehäuse eingetretene Flüssigkeit sicher und kontrolliert abgeführt werden kann. Weiterhin kann der IP-Schutz so ausgebildet sein, dass ein zur Transportvorrichtung gerichteter Antriebsstrang weitgehend mit abgedeckt bzw. so eingefasst ist, dass auch dieser gegen Spritzwasser, Produktablagerungen oder unbefugte Berührung (Eingreifschutz) etc. bestmöglich geschützt ist.

Die vorgenannten Gehäuse können dabei insbesondere auch aus Edelstahl gefertigt sein, um Anforderungen im Bereich der Lebensmitteltechnik gerecht zu werden. Grundsätzlich ist jedoch jedes Material geeignet, um die einzelnen Anforderungen bestmöglich zu erfüllen. Auch eine Kombination unterschiedlicher Materialien, mit denen elektromagnetischer oder IP-Schutz oder wärmetechnische Aufgaben erfüllt werden sollen, ist möglich.

Eine weitere vorteilhafte Ausführungsform der Erfindung sieht vor, dass die Aufnahme an ihrer der Wägezelle zugewandten Seite eine Steckverbindung aufweist. Dabei kann es sich um eine mechanische und/oder elektrische Steckverbindung handeln, die mit einer komplementär dazu ausgebildeten weiteren Steckverbindung an der Wägezelle zusammenwirkt. Zweck dieser Steckverbindung ist es, die Aufnahme und/oder das darin angeordnete Antriebsaggregat mechanisch und/oder elektrisch mit der Wägezelle Iösbar zu verbinden.

Die durch die vorgenannte Steckverbindung mögliche gleichzeitige Herstellung von mechanischer und elektrischer Verbindung reduziert den Montageaufwand und senkt die Stillstandszeiten. Dies ist besonders vorteilhaft im Bereich der Lebensmitteltechnik, wo die schnelle Montage bzw. Demontage der Komponenten zu Reinigungszwecken häufig und daher möglichst einfach erforderlich ist.

Vorteilhafterweise werden insbesondere elektrische Anschlüsse durch die Wägezelle bzw. deren Lastaufnehmer hindurch in die Aufnahme geleitet, ohne dass dafür separate bzw. außenliegende Kabel verwendet würden. Die elektrische Anbindung erfolgt ausschließlich über die starr ausgebildete Steckverbindung und dient zur Übertragung aller Signale bzw. Ströme, welche für das Antriebsaggregat oder auch weitere Komponenten der Aufnahme oder der Transportvorrichtung vorgesehen sind. Dadurch entfallen vorteilhafterweise extern in die Aufnahme oder die Transportvorrichtung hineinzuführende Leitungen/Kabel.

Zum einen vermeidet dies den Aufwand für den Anschluss des Antriebs bzw. die Verkabelung. Zum anderen wird durch Vermeidung der Kabel auch der Einfluss elektromagnetischer Strahlungen in bzw. aus diesen Kabeln vermieden, was zu einer besonders sicheren Betriebsweise führt.

Weiterhin kann die elektrische Steckverbindung explosionsgeschützt ausgeführt sein, um dabei besonderen Sicherheitsstandards Rechnung zu tragen. Auch die Ausführung als IP-geschützte Steckverbindung ist vorgesehen, ebenso wie eine besonders gegen elektromagnetische Ab- oder Einstrahlung geschützte Verbindung. Auch Kombinationen der gewählten Schutzvorkehrungen sind möglich.

Die elektrische Anbindung der Aufnahme durch die vorbeschriebene Steckverbindung erweist sich im Weiteren als vorteilhaft, da die Transportvorrichtung an sich ohne jegliche elektrische Anbindung ausgeführt sein kann. Lediglich die mechanische Anbindung an das Antriebsaggregat der Aufnahme ist für die Betriebsbereitschaft herzustellen. Dadurch kann die Transportvorrichtung völlig ohne elektrische Anschlüsse und somit auch in einfacher Form als nicht-elektrisches Betriebsmittel ausgeführt sein.

Sofern die Steckverbindung ergänzend oder alternativ zur elektrischen Ausführung auch als mechanische Verbindung ausgebildet ist, erlaubt dies in besonders einfacher Form das Aufsetzen der Aufnahme auf die Wägezelle. Durch geeignete Anschlagmittel oder Stifte kann die Aufnahme relativ zur Wägezelle bzw. deren Lastaufnehmer präzise ausgerichtet und fixiert werden. Besonders einfach kann durch die kombinierte mechanische und elektrische Steckverbindung die vollständige Anbindung der Aufnahme in elektrischer und mechanischer Hinsicht an die Wägezelle realisiert werden. Dabei kann es je nach Ausführungsform genügen, die Aufnahme auf die Wägezelle aufzustecken, wobei mechanische und elektrische Kontakte ineinander greifen und die gewünschte Verbindung herstellen.

Die elektrische Steckverbindung kann vorzugsweise so ausgeführt sein, dass im Rahmen des Einsetzens oder Abnehmens der Aufnahme in bzw. von der Wägezelle elektrische Kontakte in einer vorgebbaren Reihenfolge getrennt oder miteinander verbunden werden. Dies kann vorteilhaft dazu genutzt werden, bestimmte elektrische Verbindungen erst dann freizuschalten, wenn andere Verbindungen definiert zustande gekommen sind. So kann beispielsweise die Stromzufuhr zum Motor innerhalb der Aufnahme erst dann hergestellt werden, wenn ein vorgebbarer elektrischer oder elektromechanischer Kontakt betätigt bzw. geschlossen wird. Dies erhöht die Sicherheit bei der Inbetriebnahme der Vorrichtung. Für das Lösen der Verbindung gilt das Gleiche umgekehrt.

Eine weitere vorteilhafte Ausführungsform der Erfindung sieht vor, dass die elektrische Verbindung durch Aufsetzen der Aufnahme auf bzw. Entnehmen der Aufnahme von der Wägezelle automatisch herstellbar bzw. trennbar ist. Diese Ausführungsform bildet die vorbeschriebene elektrische Steckverbindung dahingehend aus, dass die Verbindung ausschließlich durch Einsetzen der Aufnahme in die Wägezelle zustande kommt, ohne dass zusätzliche Steck- oder Kabelverbindungen hergestellt werden müssen. Umgekehrt kann durch Entfernen der Aufnahme von der Wägezelle die vollständige elektrische Trennung der Aufnahme erreicht werden, ohne dass weitere Demontage- oder Abklemmarbeiten vorzunehmen wären.

Eine weitere vorteilhafte Ausführungsform der Erfindung mit einer vorbeschriebenen elektrischen Steckverbindung weist einen Schutzmechanismus auf, der beim Trennen der Verbindung die elektrischen Kontakte an Wägezelle und/oder Aufnahme automatisch gegen unbeabsichtigtes Kontaktieren schützt. Dadurch soll sichergestellt werden, dass die Kontakte der Steckverbindung bei abgenommener Aufnahme nicht unbeabsichtigt berührt werden können. Dadurch können Kurzschlüsse ebenso vermieden werden wie Schäden an Datenverarbeitungseinrichtungen oder Gefährdungen von Betriebspersonal. Auch die Kontakte selber werden gegen Verschmutzen oder Beschädigung geschützt. Ein besonderer Schutz der Verbindung bzw. ihrer Kontakte kann auch gegen das Eindringen von Feuchtigkeit oder Reinigungsmittel gerichtet sein, wie dies vorstehend bereits erwähnt wurde.

Der Schutzmechanismus kann in einer einfachsten Form durch eine automatisch betätigbare Schutzkappe gebildet sein, die sich über die Kontakte legt, wenn die Steckverbindung getrennt wird. Beim Aufsetzen der Aufnahme auf die Wägezelle wird diese Schutzkappe zwangsweise zur Seite geklappt, um das Zustandekommen der elektrischen Verbindung zu ermöglichen.

Die Steckverbindung kann im weiteren verdrehsicher bzw. gegen Verpolung geschützt ausgeführt sein.

Vorteilhafterweise ist die Breite der Aufnahme nicht größer gewählt als die Breite der Transportvorrichtung und der Wägezelle. "Breite" ist dabei jeweils quer zur Transportrichtung zu verstehen, in welche die Transportvorrichtung die Güter transportiert. Sofern die Breite der Aufnahme die Breite der Transportvorrichtung und der Wägezelle nicht überschreitet, lassen sich vorteilhaft mehrere Transportvorrichtungen, jeweils mit Aufnahme und Wägezelle, nebeneinander anordnen, wodurch ein mehrspuriges Wägesystem gebildet wird. Dies ist gegenüber dem Stand der Technik vorteilhaft deshalb möglich, weil das Antriebsaggregat für die Transportvorrichtung im Wesentlichen unterhalb dieser in der Aufnahme angeordnet ist und nicht etwa seitlich über die Breite der Transportvorrichtung hinaus absteht. Da der Spurabstand der einzelnen Transportvorrichtungen dadurch stark gesenkt werden kann, ist insgesamt ein schmaler Aufbau einer mehrspurigen Waage möglich, die mehrere Transportvorrichtungen mit zugehöriger Aufnahme und Wägezelle umfasst.

Eine weitere vorteilhafte Ausführungsform der Erfindung sieht vor, dass die Aufnahme Antriebsmittel umfasst, welche mit der Transportvorrichtung zu deren Förderbetrieb an einer Kopplungsstelle verbindbar sind. Diese Kopplungsstelle soll erfindungsgemäß zwischen wenigstens zwei Förderelementen der Transportvorrichtung liegen, wobei diese Förderelemente die Güter in Förderrichtung bewegen. Eine derartige Ausführungsform der Aufnahme erlaubt vorteilhaft die platzsparende Anbindung des Antriebsaggregats an die Transportvorrichtung. Im Gegensatz zu den aus dem Stand der Technik bekannten Transportvorrichtungen erfolgt hier die Einleitung der Antriebskraft innerhalb der Breite der Transportvorrichtung, wobei diese Breite durch wenigstens zwei maximal beabstandete, in Förderrichtung transportierende Förderelemente der Transportvorrichtung definiert sein soll.

Typischerweise handelt es sich bei einer solchen Transportvorrichtung um einen Bandkörper, der wenigstens zwei voneinander beabstandete Walzen umfasst, um die zwei oder mehr Förderelemente (Transportriemen, Gurte, Ketten etc.) parallel zueinander ausgerichtet gelegt sind. Die Antriebsmittel, welche sich von dem Antriebsaggregat in Richtung auf den Bandkörper erstrecken, sind dann beispielsweise als Zahnriemen ausgebildet, der um wenigstens eine der beiden Walzen gelegt ist. Während nach dem Stand der Technik der Antriebsriemen stets an einem freien Ende der Walze, zumindest aber außerhalb der maximal beabstandeten Förderelemente an der Walze angreift, erlaubt die erfindungsgemäße Aufnahme die Einleitung der Antriebskraft auch zwischen den Förderelementen, so dass die Transportvorrichtung insgesamt eng beabstandet zueinander angeordnet werden können. Im Weiteren ergibt sich durch den so gewählten Angriff der Antriebsmittel die Möglichkeit, die Transportriemen sehr einfach zur einen oder anderen Seite der Transportvorrichtung abzunehmen, ohne dass dies durch Bauteile blockiert wäre. Dies erleichtert bzw. beschleunigt die Reinigung bzw. den Austausch der Förderelemente.

In einer weiteren vorteilhaften Ausführungsform der Erfindung ist an der Aufnahme eine mit dem Gehäuse der Wägezelle oder einer anderen Auflagekomponente zusammenwirkende Überlast-Sicherung vorgesehen. Diese sichert die gewichtsbelasteten Elemente der Wägezelle vor zu hohen Belastungen. Die Auflagekomponente ist stabil und als Festland relativ zu den bewegten Komponenten derwägezelle auszuführen. Die zwischen Transportvorrichtung und Auflagekomponente angeordnete Aufnahme begünstigt die Anordnung der Überlastsicherung an der Aufnahme und erübrigt den andernfalls erforderlichen besonderen konstruktiven Aufwand.

Die vorgenannte Aufnahme kann Gegenstand von Waagen sein, welche unter Nutzung einer Transportvorrichtung das Gewicht bewegter Güter erfassen.

Weitere vorteilhafte Ausführungsformen ergeben sich aus den Unteransprüchen.

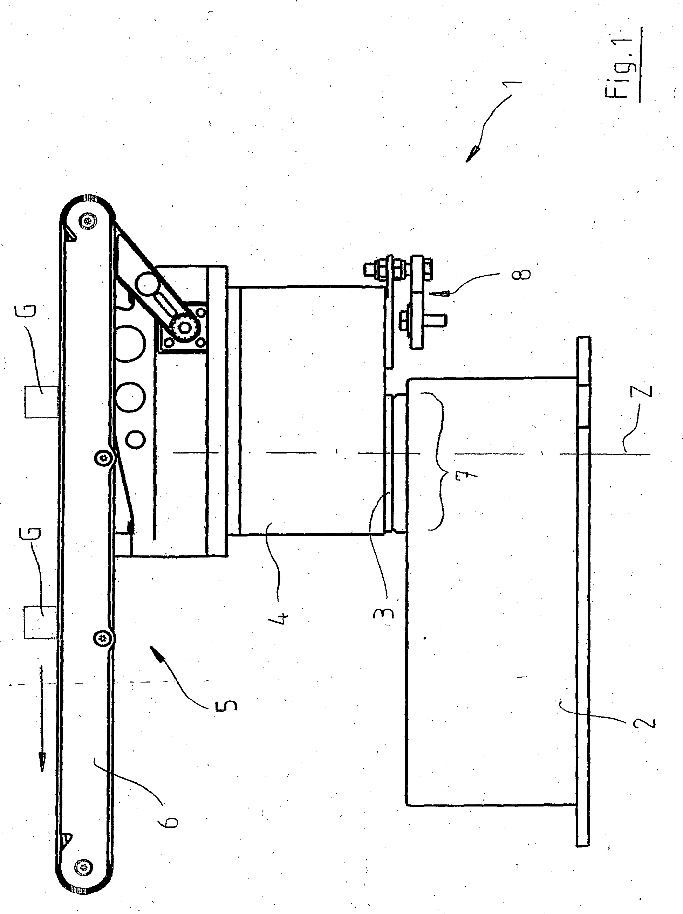

Eine Ausführungsform der Erfindung wird nachstehend anhand eines Figurenbeispiels erläutert. die einzige Fig. 1. zeigt dabei die schematische Seitenansicht einer Waage mit Aufnahme.

Die gezeigte Waage 1 umfasst eine Wägezelle 2, die zur Erfassung von Gewichtskräften vorgesehen ist. Die Wägezelle 2 weist in einem oberen Bereich einen Lastaufnehmer 3 auf, der einen Krafteinleitungsbereich 7 definiert, über welchen die Wägezelle mit einer zu erfassenden Gewichtskraft beaufschlagbar ist. Typischerweise erfolgt die Gewichtsbelastung in Richtung einer senkrecht zum Lastaufnehmer 3 gedachten Krafteinleitungsachse Z.

Des Weiteren umfasst die Waage 1 eine Transportvorrichtung 5. Diese Transportvorrichtung 5 transportiert mittels eines Förderbands 6 Güter G, deren Gewicht von der Wägezelle 2 erfasst werden sollen.

Zur Übertragung der Gewichtskräfte der Güter G auf den Lastaufnehmer 3 der Wägezelle 2 ist zwischen Transportvorrichtung 5 und Wägezelle 2 eine Aufnahme 4 eingebracht. Die Aufnahme 4 dient zur Aufnahme des nicht näher dargestellten Antriebsaggregats, mit weichem das Förderband 6 der Transportvorrichtung 5 angetrieben wird.

Durch diese Anordnung wird der Kraftfluss der Gewichtskraft vorteilhaft durch die das Antriebsaggregat aufnehmende Aufnahme 4 hindurch in die Wägezelle 2 bzw. deren Lastaufnehmer 3 eingeleitet.

Weiterhin weist die Aufnahme 4 eine Überlastsicherung 8 auf, welche mit einer nicht näher dargestellten Komponente zusammenwirkt. Bei dieser Komponente kann es sich um das Gehäuse der Wägezelle 2 oder auch ein anderes Festland handeln, welches zur Aufnahme überhöhter Lasten geeignet ist.

## Patentansprüche

1. Aufnahme (4) für das Antriebsaggregat einer Transportvorrichtung (5),
a) wobei die Transportvorrichtung (5) zum Transport von Gütern (G) ausgebildet ist, deren Gewichtskraft von der Wägezelle (2) einer Waage (1) zu erfassen ist, und
b) wobei die Wägezelle (2) die zu erfassende Gewichtskraft über einen Krafteinleitungsbereich (7) erfährt, und
c) wobei die Wägezelle (2) die zu erfassende Gewichtskraft (G) in Richtung einer gedachten, den Krafteinleitungsbereich durchstoßenden Krafteinleitungsachse (Z) erfährt,
**dadurch gekennzeichnet,**
d) **dass** die Aufnahme (4) zusammen mit dem darin angeordneten Antriebsaggregat ein austauschbares Modul bildet, zur Übertragung der Gewichtskraft von der Transportvorrichtung (5) in die Wägezelle (2) dazwischenliegend vorsehbar und über einen werkzeuglos betätigbaren Verriegelungsmechanismus modular austauschbar ist, und
e) **dass** die Aufnahme das einzige Bindeglied zwischen der Transportvorrichtung und der Wägezelle bildet.

2. Aufnahme (4) nach Anspruch 1, **dadurch gekennzeichnet, dass** das Antriebsaggregat in der Aufnahme (4) so angeordnet ist, dass der aus Aufnahme (4) und Antriebsaggregat resultierende Schwerpunkt im Wesentlichen in der Krafteinleitungsachse (Z) liegt.

3. Aufnahme (4) nach Anspruch 1, **dadurch gekennzeichnet, dass** das Antriebsaggregat (5) in der Aufnahme (4) so angeordnet ist, dass der aus Aufnahme (4), Antriebsaggregat und Transportvorrichtung (5) resultierende Schwerpunkt im Wesentlichen in der Krafteinleitungsachse liegt.

4. Aufnahme (4) nach einem der vorigen Ansprüche, **dadurch gekennzeichnet, dass** die das Antriebsaggregat aufnehmende Aufnahme (4) zur Verbesserung der elektromagnetischen Verträglichkeit ein metallisches, im Wesentlichen dicht gekapseltes Gehäuse aufweist.

5. Aufnahme (4) nach einem der vorigen Ansprüche, **dadurch gekennzeichnet, dass** die das Antriebsaggregat aufnehmende Aufnahme (4) zur Abfuhr oder Abschirmung von Antriebswärme des Antriebsaggregats ein Gehäuse aufweist.

6. Aufnahme (4) nach einem der vorigen Ansprüche, **dadurch gekennzeichnet, dass** die Aufnahme (4) zum IP-Schutz der darin angeordneten Komponenten ein Gehäuse aufweist.

7. Aufnahme (4) nach einem der vorigen Ansprüche, **dadurch gekennzeichnet, dass** die Aufnahme (4) zum Explosionsschutz der darin angeordneten Komponenten ein Gehäuse aufweist.

8. Aufnahme (4) nach einem der vorigen Ansprüche, **dadurch gekennzeichnet, dass** die Aufnahme (4) an ihrer der Wägezelle (2) zugewandten Seite eine mit der Wägezelle (2) komplementär zusammenwirkende mechanische und/oder elektrische Steckverbindung aufweist, mit der die Aufnahme (4) und/oder das darin angeordnete Antriebsaggregat mechanisch und/oder elektrisch mit der Wägezelle (2) lösbar verbindbar ist.

9. Aufnahme (4) nach dem vorhergehenden Anspruch, **dadurch gekennzeichnet, dass** die elektrische Verbindung explosionsgeschützt und/oder IP-geschützt und/oder zur verbesserten elektromagnetischen Verträglichkeit gekapselt ausgeführt ist.

10. Aufnahme (4) nach einem der Ansprüche 8 oder 9, **dadurch gekennzeichnet, dass** die elektrische Verbindung durch Aufsetzen der Aufnahme (4) auf bzw. Entnehmen der Aufnahme (4) von der Wägezelle (2) automatisch herstellbar bzw. trennbar ist.

11. Aufnahme (4) nach einem der Ansprüche 8 bis 10, **dadurch gekennzeichnet, dass** die elektrische Verbindung einen Schutzmechanismus aufweist, der beim Trennen der Verbindung die elektrischen Kontakte an Wägezelle (2) und/oder Aufnahme (4) automatisch gegen unbeabsichtigtes Kontaktieren schützt.

12. Aufnahme (4) nach einem der vorhergehenden Ansprüche, **dadurch gekennzeichnet, dass** die Breite der Aufnahme (4) nicht größer gewählt ist als die Breite der Transportvorrichtung (5) und/oder der Wägezelle (2).

13. Aufnahme (4) nach einem der vorhergehenden Ansprüche, **dadurch gekennzeichnet, dass** die Aufnahme (4) Antriebsmittel umfasst, welche mit der Transportvorrichtung (5) zu deren Förderbetrieb an einer Kopplungsstelle verbindbar sind, die zwischen wenigstens zwei Förderelementen liegt, welche die Güter in Förderrichtung bewegen.

14. Aufnahme (4) nach einem der vorhergehenden Ansprüche, **dadurch gekennzeichnet, dass** an der Aufnahme (4) eine mit der Wägezelle (2) oder einer anderen Auflagekomponente zusammenwirkende Überlast-Sicherung vorgesehen ist.

15. Waage (1) mit wenigstens einer zugehörigen Aufnahme (4) nach einem der vorigen Ansprüche.

## Claims

1. A holding fixture (4) for the drive unit of a transport device (5),
a) wherein the transport device (5) is designed to transport goods (G) whose force due to weight is to be detected by the weighing cell (2) of a scale (1), and
b) wherein the weighing cell (2) experiences the force due to weight that is to be detected by way of a force-introduction region (7), and
c) wherein the weighing cell (2) experiences the force due to weight (G) to be detected in the direction of an imaginary force-introduction axis (Z) penetrating the force-introduction region,
**characterised in that**
d) the holding fixture (4) together with the drive unit arranged therein constitutes an exchangeable module, which can be provided, for the transmission of the force due to weight from the transport device (5) into the weighing cell (2), so that it lies in between, and can be exchanged in a modular fashion by way of a locking mechanism that can be actuated without tools, and
e) the holding fixture constitutes the single linking element between the transport device and the weighing cell.

2. A holding fixture (4) according to claim 1, **characterised in that** the drive unit is arranged in the holding fixture (4) in such a way that the centre of gravity that results from the holding fixture (4) and the drive unit lies substantially in the force-introduction axis (Z).

3. A holding fixture (4) according to claim 1, **characterised in that** the drive unit (5) is arranged in the holding fixture (4) in such a way that the centre of gravity that results from the holding fixture (4), the drive unit and the transport device (5) lies substantially in the force-introduction axis.

4. A holding fixture (4) according to one of the previous claims, **characterised in that** the holding fixture (4) that holds the drive unit has, in order to improve the electromagnetic compatibility, a metallic, substantially sealed housing.

5. A holding fixture (4) according to one of the previous claims, **characterised in that** the holding fixture (4) that holds the drive unit has a housing for dissipating or screening drive heat of the drive unit.

6. A holding fixture (4) according to one of the previous claims, **characterised in that** the holding fixture (4) has a housing for ingress protection of the components arranged therein.

7. A holding fixture (4) according to one of the previous claims, **characterised in that** the holding fixture (4) has a housing to protect the components arranged therein from explosion.

8. A holding fixture (4) according to one of the previous claims, **characterised in that** the holding fixture (4) has on its side facing the weighing cell (2) a mechanical and/or electrical plug connection which cooperates complementarily with the weighing cell (2) and with which the holding fixture (4) and/or the drive unit arranged therein can be releasably mechanically and/or electrically connected to the weighing cell (2).

9. A holding fixture (4) according to the preceding claim, **characterised in that** the electrical connection is protected against explosion and/or ingress and/or is constructed so that it is encapsulated for improved electromagnetic compatibility.

10. A holding fixture (4) according to one of claims 8 or 9, **characterised in that** the electrical connection can be automatically established or broken by placing the holding fixture (4) on or removing the holding fixture (4) from the weighing cell (2).

11. A holding fixture (4) according to one of claims 8 to 10, **characterised in that** the electrical connection has a protective mechanism which, when the connection is broken, automatically protects the electrical contacts on the weighing cell (2) and/or holding fixture (4) against unintentional contacting.

12. A holding fixture (4) according to one of the preceding claims, **characterised in that** the width of the holding fixture (4) is chosen so that it is not greater than the width of the transport device (5) and/or the weighing cell (2).

13. A holding fixture (4) according to one of the preceding claims, **characterised in that** the holding fixture (4) comprises drive means which can be connected to the transport device (5) for its conveying operation at a coupling point which lies between at least two conveying elements moving the goods in the conveying direction.

14. A holding fixture (4) according to one of the preceding claims, **characterised in that** provided on the holding fixture (4) there is an overload safety device that cooperates with the weighing cell (2) or another supporting component.

15. A scale (1) having at least one associated holding fixture (4) according to one of the previous claims.

## Revendications

1. Logement (4) pour le groupe d'entrainement d'un dispositif de transport (5),
a) le dispositif de transport (5) étant façonné pour le transport de marchandises (G) dont le poids droit être mesuré par la cellule de pesée (2) d'une balance (1),
b) la cellule de pesée (2) déterminant le poids à mesurer par l'intermédiaire d'une zone de transmission des forces (7), et
c) la cellule de pesée (2) déterminant le poids à mesurer (G) en direction d'un axe imaginaire de transmission des forces (Z) traversant la zone de transmission des forces,
**caractérisé en ce que**
d) le logement (4) forme, conjointement avec le groupe d'entraînement disposé à l'intérieur, un module interchangeable, il peut être prévu entre les deux pour le transfert du poids du dispositif de transport (5) vers la cellule de pesée (2) et il est conçu de manière modulaire et interchangeable par l'intermédiaire d'un mécanisme de verrouillage actionnable sans outils et
e) le logement constitue l'unique organe de liaison entre le dispositif de transport et la cellule de pesée.

2. Logement (4) selon la revendication 1, **caractérisé en ce que** le groupe d'entraînement est disposé dans le logement (4) de telle sorte que le centre de gravité résultant du logement (4) et du groupe d'entraînement se trouve sensiblement sur l'axe de transmission des forces (Z).

3. Logement (4) selon la revendication 1, **caractérisé en ce que** le groupe d'entraînement (5) est disposé dans le logement (4) de telle sorte que le centre de gravité résultant du logement (4), du groupe d'entraînement et du dispositif de transport (5) se trouve sensiblement sur l'axe de transmission des forces.

4. Logement (4) selon l'une quelconque des revendications précédentes, **caractérisé en ce que** le logement (4) recevant le groupe d'entraînement présente, pour améliorer la compatibilité électromagnétique, un boîtier métallique, en capsulé de manière sensiblement étanche.

5. Logement (4) selon l'une quelconque des revendications précédentes, **caractérisé en ce que** le logement (4) recevant le groupe d'entraînement présente un boîtier pour l'évacuation ou pour la protection contre la chaleur d'entraînement du groupe d'entraînement.

6. Logement (4) selon l'une quelconque des revendications précédentes, **caractérisé en ce que** le logement (4) présente un boitier pour la protection IP des composants qui y sont disposés.

7. Logement (4) selon l'une quelconque des revendications précédentes, **caractérisé en ce que** le logement (4) présent un boîtier pour la protection contre les explosions des composants qui y sont disposés.

8. Logement (4) selon l'une quelconque des revendications précédentes, **caractérisé en ce que** le logement (4) présente, sur son côté orienté vers la cellule de pesée (2), une fiche de raccordement mécanique et/ou électrique complémentaire coopérant avec la cellule de pesée (2), à l'aide de laquelle le logement (4) et/ou le groupe d'entraînement disposé à l'intérieur peut être relié mécaniquement et/ou électriquement de manière amovible à la cellule de pesée (2).

9. Logement (4) selon la revendication précédente, **caractérisé en ce que** le raccordement électrique est réalisé avec une protection contre les explosions et/ou avec une protection IP et/ou encapsulée pour une meilleure compatibilité électromagnétique.

10. Logement (4) selon l'une quelconque des revendications 8 ou 9, **caractérisé en ce que** le raccordement électrique peut être automatiquement établie ou débranché en posant le logement (4) sur la cellule de pesée (2) ou en retirant le logement (4) de la cellule de pesée (2).

11. Logement (4) selon l'une quelconque des revendications 8 à 10, **caractérisé en ce que** le raccordement électrique présente un mécanisme de protection qui protège automatiquement les contacts électriques de la cellule de pesée (2) et/ou le logement (4) contre un contact involontaire lors du débranchement du raccordement.

12. Logement (4) selon l'une quelconque des revendications précédentes, **caractérisé en ce que** la largeur du logement (4) n'est pas choisie en étant supérieure à la largeur du dispositif de transport (5) et/ou de la cellule de pesée (2).

13. Logement (4) selon l'une quelconque des revendications précédentes, **caractérisé en ce que** le logement (4) comprend des moyens d'entraînement pouvant être reliés au dispositif de transport (5), pour son fonctionnement de convoyage, au niveau d'un point de couplage qui se trouve au moins entre deux éléments de convoyage qui déplacent les marchandises dans la direction de convoyage.

14. Logement (4) selon l'une quelconque des revendications précédentes, **caractérisé en ce que**, sur le logement (4) est prévue une sécurité anti-surcharge coopérant avec la cellule de pesée (2) ou un autre composant d'appui.

15. Balance (1) dotée d'au moins un logement (4) correspondant selon l'une des revendications précédentes.
